# EUROPÄISCHE PATENTANMELDUNG

(11) **EP 1 647 921 A1**
(43) Veröffentlichungstag der Anmeldung: **19.04.2006**
(21) Anmeldenummer: 05021868.4
(22) Anmeldetag: 07.10.2005
(51) Int. Cl.: G06K 19/06, G06K 19/16, G07D 7/00

(54) **Datenträger mit individualisiertem optisch variablen Element**

(30) Priorität: 16.10.2004 DE 102004050550
(71) Anmelder: Hueck Folien GmbH & Co. KG, 92712 Pirk (DE)
(72) Erfinder: Reich, Peter, 92712 Pirk (DE)
(74) Vertreter: Landgraf, Elvira

(57) **Zusammenfassung**

Die Erfindung betrifft ein Sicherheitselement, das mindestens ein optisch variables Element beinhaltet, dadurch gekennzeichnet, dass es eine zerstörungsfrei hergestellte Individualisierung aufweist, sowie dieses Sicherheitselement aufweisende Wertdokumente, Datenträger, Verpackungen und ein Verfahren zur Herstellung des Sicherheitselements.

## Beschreibung

Die Erfindung betrifft einen Datenträger mit einem optisch variablen Element, das individualisierte Merkmale aufweist.

Optisch variable Elemente zeigen je nach Lichteinfallswinkel und Betrachtungswinkel unterschiedliche optische Effekte. Beispiele für optisch variable Elemente sind Beugungsstrukturen, Beugungsgitter, Reflexionsmuster, Oberflächenreliefstrukturen, Hologramme, Kinegramme und dergleichen.

Diese Elemente werden unter anderem als Sicherheitselemente auf oder in Datenträgern, wie Banknoten, Wertpapiere, Ausweisen, Karten, oder auf Verpackungen , beispielsweise Pharmablistern und oder sensiblen Gütern, wie beispielsweise CD-Roms, DVDs und dergleichen verwendet.

Insbesondere bei der Verwendung von optisch variablen Elementen als Sicherheitselemente in oder auf Wertdokumenten ist jedoch bei den üblichen optisch variablen Elementen, die keine individuellen Merkmale tragen, der Sicherheitslevel sehr gering. Üblicherweise werden dabei nämlich aus Kostengründen keine Unikate hergestellt, sondern das in seiner Herstellung relativ kostenaufwendige erste optisch variable Element einfach repliziert.

Aus der EP 1 229 492 A ist ein Datenträger bekannt, der ein optisch variables Element aufweist, bei dem die Beugungsstrukturen eine Standardinformation repräsentieren, die durch nicht holographische Maßnahmen individualisiert ist. Diese Individualisierung liegt in wenigstens einer Schicht des Elements in Form einer irreversiblen Änderung vor, die durch lokalen Abtrag, irreversible Veränderung oder Zerstörung in geeigneten Schichten des optisch variablen Elements erzeugt wird.

Dabei wird jedoch ein Teil der Beugungsstrukturen verändert, sodass die teilweise Zerstörung der Schichten auch einen negativen Einfluss auf das Erscheinungsbild des optisch variablen Elements haben wird.

Aufgabe der Erfindung war es, ein Sicherheitselement und einen ein solches Sicherheitselement aufweisenden Datenträger bereitzustellen, wobei das optisch variable Sicherheitselement individuelle Merkmale aufweist, die ohne teilweise Zerstörung der Beugungsstrukturen eine zur Standardinformation des optisch variablen Elements unterscheidbare Information höherer Sicherheitsstufe bieten.

Gegenstand der Erfindung ist daher ein Sicherheitselement, das mindestens ein optisch variables Element beinhaltet, dadurch gekennzeichnet, dass es eine zerstörungsfrei hergestellte Individualisierung aufweist.

Vorzugsweise wird diese Individualisierung im Digitaldruckverfahren hergestellt.

Ein weiterer Gegenstand der Erfindung ist ein Folienmaterial zur Herstellung von Sicherheitselementen in Form von Fäden, Bändern, Streifen, Patches oder anderen Formaten, die mindestens ein optisch variables Element und eine zerstörungsfrei hergestellte Individulaisierung aufweisen.

Ein weiterer Gegenstand der Erfindung ist ein Datenträger, der ein Sicherheitselement aufweist, das mindestens ein optisch variables Element beinhaltet, das eine zerstörungsfrei hergestellte Individualisierung aufweist.

Ein weiterer Gegenstand der Erfindung ist ein Verfahren zur Herstellung eines Sicherheitselements mit mindestens einem optisch variablen individualisierten Element, dadurch gekennzeichnet, dass bei der Herstellung des optisch variablen Elements eine Steuermarke in einem Verfahrensschritt aufgebracht wird und die Aufbringung des individualisierten Elements durch Digitaldruck erfolgt.

Das erfindungsgemäße Sicherheitselement weist auf einem Trägersubstrat ein optisch variables Element auf.

Unter einem optisch variablen Element werden im Folgenden Beugungsstrukturen, lineare oder strukturierte Beugungsgitter, Reflexionsmuster, Oberflächenreliefstrukturen, Hologramme, Kinegramme, Diffraktionsstrukturen und dergleichen verstanden.

Üblicherweise ist zur Sichtbarmachung des optisch variablen Elements auf dem Trägersubstrat eine reflektierende Schicht partiell oder vollflächig vorhanden oder wird im Anschluss an die Herstellung des optisch variablen Elements auf dieses partiell oder vollflächig aufgebracht.

Diese reflektierende Schicht kann jedoch auch auf dem Substrat auf das das optisch aktive Element aufgebracht wird bereits vorhanden sein.

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 3 - 700 µm, bevorzugt 5 - 200 µm, besonders bevorzugt 5 - 50 µm auf.

Das Trägersubstrat kann ein- oder beidseitig mit einem Heiß- oder Kaltsiegelkleber oder einer Selbstklebebeschichtung versehen sein oder nach der Aufbringung der Oberflächenstruktur und gegebenenfalls nach Durchführung weiterer Beschichtungsschritte damit versehen werden.

Zur Aufbringung des optisch variablen Elements kann das Trägersubstrat in einem Beschichtungsverfahren wie beispielsweise einem Siebdruck-, Tiefdruck- oder Flexodruckverfahren mit einem strahlungshärtbaren Lack beschichtet werden. Die Beschichtung kann partiell oder vollflächig erfolgen.

Der strahlungshärtbare Lack kann beispielsweise ein strahlungshärtbares Lacksystem auf Basis eines Polyester-, eines Epoxy- oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der beiden Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Die Abformung der Oberflächenstruktur, also der Diffraktions-, Beugungs- oder Reliefstruktur erfolgt beispielsweise bei kontrollierter Temperatur mittels einer Matrize oder unter Verwendung einer Prägeform in die strahlungshärtbare Lackschicht, die durch Aktivierung des ersten Photoinitiators bis zum Gelpunkt vorgehärtet wurde und zum Zeitpunkt der Abformung sich in diesem Stadium befindet.
Wird ein wasserverdünnbarer strahlungshärtbarer Lack verwendet kann gegebenenfalls eine Vortrocknung vorgeschaltet werden, beispielsweise durch IR-Strahler.

Die Schichtdicke des aufgebrachten strahlungshärtbaren Lacks kann je nach Anforderung an das Endprodukt und Dicke des Substrats variieren und beträgt im allgemeinen zwischen 0,5 und 50 µm, vorzugsweise zwischen 2 und 10 µm, besonders bevorzugt zwischen 2 und 5 µm.

Die Abformung der Oberflächenstruktur erfolgt registergenau zur Beschichtung des Trägersubstrats, wobei eine Toleranz von +/- 0,5 mm eingehalten werden kann. Dies wird durch eine Registersteuerung erreicht

Die Prägeform kann transparent sein, sie kann ein geschweißter, geklebter, gelöteter oder nahtloser Metallsleeve oder Kunststoffsleeve sein. Bevorzugt werden Nickelsleeves verwendet. Um eine genaue Prägung der Oberflächenstruktur zu erhalten, ist es zweckmäßig das Prägewerkzeug auf einem temperaturkontrollierten pneumatischen und strömungsgekühlten oder beheizten Spannzylinder zu montieren.

Dabei wird das Trägersubstrat in Kontakt mit dem temperaturgesteuerten Spannzylinder gebracht, die Prägung der Oberflächenstruktur erfolgt vorzugsweise nur dann, wenn das mit dem strahlungshärtbaren Lack beschichtete Trägersubstrat sich in Kontakt mit dem Zylinder befindet.
Dabei erfolgt eine genaue Kontrolle der Verfahrensparameter, wie Druck und insbesondere Temperatur, um eine zu rasche oder zu langsame Zustandsveränderung der Lackschicht zu vermeiden.
Dabei erfolgt die Aushärtung des UV-Lacks und anschließend eine Nachhärtung.

Es können aber auch andere bekannte Verfahren zur Herstellung von optisch variablen Elementen, wie sie zum Beispiel in der EP 1 229 492 oder der WO 94/18609 bekannt sind, verwendet werden.

Im Anschluss an oder während des Herstellungsverfahrens des optisch variablen Elements wird auf die Trägerbahn eine Steuermarke vorzugsweise inline aufgebracht, die dazu dient, anschließend die Digitaldruckmaschine zu steuern um das individualisierte Merkmal positionsgenau aufzubringen.

Das individualisierte Merkmal kann dabei in einem einfachen Fall eine fortlaufende Nummerierung bzw. Seriennummern, die auch aus einer definierten Zahlen- und Buchstabenfolge bestehen können, darstellen. Ferner ist es möglich beispielsweise Buchstaben oder Buchstabenfolgen aufzubringen: Ferner können individuelle Informationen, wie beispielsweise bei Ausweispapieren Geburtsdaten, Sozialversicherungsnummern oder bei Gütern bzw. deren Verpackungen Informationen über die Produktionscharge, den Herstellungsort, das Produkt und dergleichen aufzubringen.
Ferner ist es möglich, Muster, Symbole, Bilder und dergleichen aufzubringen.

Dabei ist es möglich diese Informationen in einem bestimmten ausgewählten Bereich des optisch variablen Elements aufzubringen, beispielsweise einer Linie, Kurve oder sonstigen Struktur des optisch aktiven Elements folgend, oder in einem begrenzten Bereich innerhalb der durch das optisch variable Element definierten Standardinformation.

Durch geeignete Wahl der im Digitaldruck verwendeten Farbe oder des Lacks ist es möglich, das Erscheinungsbild des individualisierten Merkmals so zu gestalten, dass sie mit freien Auge entweder sichtbar oder erst bei Betrachtung unter einem definierten Betrachtungswinkel und/oder Lichteinfallswinkel sichtbar ist, oder überhaupt mit freiem Auge nicht erkannt werden kann.

So kann eine individualisierte Information so gestaltet werden, dass die Farbe dieses Merkmals mit dem Erscheinungsbild des optisch variablen Elements unter jedem oder nur bestimmten Betrachtungswinkel(n) und/oder Lichteinfallswinkel(n) kontrastiert. Dabei kann dieses Merkmal aber auch unter einem bestimmten Betrachtungswinkel einen integralen aber individualisierten Bestandteil des optisch variablen Elements darstellen oder deutlich als unterscheidendes Merkmal erkannt werden.

In einer Ausführungsform kann die zur Herstellung des individualisierten Merkmals verwendete Farbe bzw. der Lack so gewählt werden, dass er zusätzliche maschinenlesbare Eigenschaften aufweist. So ist es beispielsweise möglich eine metallisch erscheinende Farbe mit magnetischen oder ausgezeichneten elektrischen leitfähigen Eigenschaften zu verwenden, die im Erscheinungsbild des optisch aktiven Elements mit freiem Auge nicht oder nur schwer erkennbar ist.

So können beispielsweise Farben oder Lacke verwendet werden, die ein Pigment, das elektrisch leitfähige und/oder magnetische Eigenschaften aufweist und mit metallischen Legierungen, beispielsweise Aluminium- oder Messing-Bronzen belegt sind. Besonders vorteilhaft werden diese Pigmente aber durch Belegen mit Metallen, beispielsweise durch Bedampfen oder chemische Abscheidung, durch Galvanisieren oder Coaten metallisch eingefärbt.

Daher ist ein Aufdruck einer individualisierten Information, vorzugsweise in Form eines Barcodes oder anderen Codes mit derartigen Farben und Lacken auf dem Hintergrund der reflektierenden Schicht mit freiem Auge nicht oder nur schwer erkennbar, allerdings sind diese Informationen dann einfach maschinenlesbar.

Zur Einstellung elektrischer Eigenschaften, beispielsweise Leitfähigkeit können beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO, FTO und dergleichen zugegeben werden. Weiters können auch dotierte oder nicht dotierte Halbleiter wie beispielsweise Silicium, Germanium Galliumarsenid oder Selen oder lonenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden.

Zur Einstellung der magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) verwendet werden.

Besonders ist zur Einstellung der magnetischen Eigenschaften eine Magnetpigmentfarbe auf Basis von oxidischen Pigmenten wie beispielsweise Fe₂O₃ oder Fe₃O₄, Metallpigmenten wie Eisen, Nickel, Cobalt oder Chrom und/oder deren Legierungen, z.B.: Cr-Ni-Stahl (Edelstahl), Barium- bzw. Cobalt-Ferrite oder ähnliche.
Diese Pigmente können hart- oder weichmagnetisch sein.

Vorzugsweise sind die Pigmente in einer wässrigen oder lösungsmittelhaltigen Acrylat-Polymerdispersion (mit einem MG von 150.000 - 300.000) bzw. in einer Acrylat-Styrol- oder Acrylat-Urethan-Polymerdispersion dispergiert sein. Als Lösungsmittel kommen dabei Wasser, Alkohole, wie i-Propanol, oder Methoxypropanol, Ester wie Ethylacetat, Ketone wie Methylethylketon und deren Mischungen in Frage.

Es können auch verschiedene Eigenschaften durch Zufügen verschiedener oben genannter Zusätze kombiniert werden. So ist es möglich angefärbte und/oder elektrisch leitfähige Magnetpigmente zu verwenden.
So kann beispielsweise eine derartige Magnetpigmentfarbe durch Wahl der geeigneten Pigmente und entsprechende Konzentration intrinsisch leitfähig eingestellt werden: So können beispielsweise Fe₃O₄, Russ, oder Metalle, leitfähige ferromagnetische Pigmente, leitfähige Stahlpigmente, ggf. in einer leitfähigen Polymermatrix zugegeben werden. Die Konzentration der Pigmente kann etwa 0,01 - 30 % betragen.

Durch Zusatz von leitfähigen Materialien, beispielsweise, Ruß, Graphit oder Silber weist die Magnetpigmentfarbe zusätzlich elektrisch leitfähige Eigenschaften auf.
Dadurch können zwei verschiedene funktionelle Merkmale in einer Schicht aufgebracht werden.

Ferner ist es möglich den individualisierten Aufdruck in einer Farbe bzw. einem Lack, der bei normaler Beleuchtung im visuellen Spektralbereich transparente lumineszierende Pigmente aufweist, die bei Beleuchtung mit Strahlung außerhalb des visuellen Spektralbereichs Strahlung aus dem visuellen Spektralbereich emittieren, auszuführen.

Dabei sind diese visuellen Merkmale mit freiem Auge unter tageslicht- oder tageslichtähnlicher Beleuchtung nicht erkennbar, bei Betrachtung unter Beleuchtung, beispielsweise unter UV-Licht, jedoch entsprechend farbig erkennbar.

Es ist auch möglich, die zerstörungsfrei hergestellte Individualisierung in einem oder unterschiedlichen Verfahrensschritten mit unterschiedlichen Farben oder Lacken, die unterschiedliche optische und/oder maschinenlesbare Eigenschaften aufweisen, herzustellen.

Die erfindungsgemäßen Sicherheitselemente weisen daher mindestens zwei unterschiedliche Sicherheitsmerkmale mit unterschiedlichen Sicherheitsstufen auf.

Die erfindungsgemäßen Sicherheitselemente können gegebenenfalls ein- oder beidseitig mit einer Schutzlackschicht, die pigmentiert oder nicht pigmentiert sein kann, versehen sein.

Die erfindungsgemäßen Sicherheitselemente werden gegebenenfalls nach entsprechender Konfektionierung (beispielsweise zu Fäden, Bändern Streifen, Patches oder anderen Formaten) daher als Sicherheitsmerkmale in Datenträgern, insbesondere Wertdokumenten wie Ausweisen, Karten, Banknoten CDs, DVDs oder Etiketten, Siegeln und dergleichen, aber auch in Verpackungsmaterialien für sensible Güter, wie Pharmazeutika, Kosmetika, Datenträger, elektronische Bauteile und dergleichen oder für Ersatzteilkennzeichnungen verwendet.

## Patentansprüche

1. Sicherheitselement, das mindestens ein optisch variables Element beinhaltet, **dadurch gekennzeichnet, dass** es eine zerstörungsfrei hergestellte Individualisierung aufweist.

2. Sicherheitselement nach Anspruch 1, **dadurch gekennzeichnet, dass** die zerstörungsfrei hergestellte Individualisierung im Digitaldruck hergestellt ist.

3. Sicherheitselement nach einem der Ansprüche 1 oder 2, **dadurch gekennzeichnet, dass** die zerstörungsfrei hergestellte Individualisierung mit freiem Auge erkennbar ist.

4. Sicherheitselement nach einem der Ansprüche 1 oder 2, **dadurch gekennzeichnet, dass** die zerstörungsfrei hergestellte Individualisierung mit freiem Auge nur unter definierten Betrachtungs- und/oder Lichteinfallswinkeln erkennbar ist.

5. Sicherheitselement nach einem der Ansprüche 1 oder 2, **dadurch gekennzeichnet, dass** die zerstörungsfrei hergestellte Individualisierung mit freiem Auge nicht erkennbar ist.

6. Sicherheitselement nach einem der Ansprüche 1 bis 5, **dadurch gekennzeichnet, dass** die zerstörungsfrei hergestellte Individualisierung maschinenlesbar ist.

7. Sicherheitselement nach Anspruch 6, **dadurch gekennzeichnet, dass** die zerstörungsfrei hergestellte Individualisierung magnetische, elektrisch leitfähige und/oder lumineszierende Eigenschaften aufweist.

8. Sicherheitselement nach einem der Ansprüche 1 bis 7, **dadurch gekennzeichnet, dass** die zerstörungsfrei hergestellte Individualisierung in einem bestimmten ausgewählten Bereich des optisch variablen Elements aufgebracht ist.

9. Sicherheitselement nach Anspruch 8, **dadurch gekennzeichnet, dass** die zerstörungsfrei hergestellte Individualisierung einer Linie, Kurve oder sonstigen Struktur des optisch aktiven Elements folgend, oder in einem begrenzten Bereich innerhalb der durch das optisch variable Element definierten Standardinformation aufgebracht ist.

10. Sicherheitselement nach einem der Ansprüche 1 bis 9, **dadurch gekennzeichnet, dass** es zur Sichtbarmachung des optisch variablen Elements eine reflektierende Schicht aufweist.

11. Sicherheitselement nach einem der Ansprüche 1 bis 10, **dadurch gekennzeichnet, dass** es ein- oder beidseitig mit einer Schutzlackschicht, die pigmentiert oder unpigmentiert sein kann, versehen ist.

12. Sicherheitselement nach einem der Ansprüche 1 bis 10, **dadurch gekennzeichnet, dass** es ein- oder beidseitig mit einer Kalt- oder Heißklebebeschichtung oder mit einer Selbstklebebeschichtung, die pigmentiert oder unpigmentiert sein kann, versehen ist.

13. Folienmaterial zur Herstellung von Sicherheitselementen in Form von Fäden, Bändern, Streifen, Patches oder anderen Formaten nach einem der Ansprüche 1 bis 12.

14. Datenträger, **dadurch gekennzeichnet, dass** der Datenträger mindestens ein Sicherheitselement nach den Ansprüchen 1 bis 12 aufweist.

15. Wertdokument, **dadurch gekennzeichnet, dass** das Wertdokument mindestens ein Sicherheitselement nach den Ansprüchen 1 bis 12 aufweist.

16. Verpackung, **dadurch gekennzeichnet, dass** die Verpackung mindestens ein Sicherheitsmerkmal nach den Ansprüchen 1 bis 12 aufweist.

17. Verfahren zur Herstellung eines Sicherheitselements mit mindestens einem optisch variablen individualisierten Element, **dadurch gekennzeichnet, dass** bei der Herstellung des optisch variablen Elements eine Steuermarke in einem Verfahrensschritt aufgebracht wird und die Aufbringung des individualisierten Elements durch Digitaldruck erfolgt.
